# EUROPÄISCHE PATENTSCHRIFT

(11) **EP 3 782 132 B1**
(45) Veröffentlichungstag und Bekanntmachung des Hinweises auf die Patenterteilung: **22.09.2021**
(21) Anmeldenummer: 19801851.7
(22) Anmeldetag: 11.11.2019
(51) Int. Cl.: G07C 5/00, G07C 5/08

(54) **VERFAHREN ZUM ANONYMISIERTEN ÜBERMITTELN VON SENSORDATEN EINES FAHRZEUGS AN EINE FAHRZEUGEXTERNE EMPFANGSEINHEIT SOWIE EIN ANONYMISIERUNGSSYSTEM UND EIN KRAFTFAHRZEUG**
METHOD FOR THE ANONYMIZED TRANSMISSION OF SENSOR DATA OF A VEHICLE TO A VEHICLE-EXTERNAL RECEIVING UNIT AS WELL AS AN ANONYMISATION SYSTEM AND A MOTOR VEHICLE
PROCÉDÉ POUR LA TRANSMISSION ANONYMISÉE DE DONNÉES DE CAPTEUR D'UN VÉHICULE À UNE UNITÉ DE RÉCEPTION EXTERNE AU VÉHICULE AINSI QU'UN SYSTÈME D'ANONYMISATION ET VÉHICULE AUTOMOBILE

(30) Priorität: 27.11.2018 DE 102018220307
(43) Veröffentlichungstag der Anmeldung: 24.02.2021
(73) Patentinhaber: Audi AG, 85045 Ingolstadt (DE)
(72) Erfinder: STINNER, Markus, 80798 München (DE)
(86) Internationale Anmeldenummer: PCT/EP2019/080792
(87) Internationale Veröffentlichungsnummer: WO 2020/108964

(56) Entgegenhaltungen:
- DE-A1-102011 106 295
- DE-A1-102016 225 287
- US-A1- 2017 358 204
- US-A1- 2018 122 230

## Beschreibung

Die Erfindung betrifft ein Verfahren zum anonymisierten Übermitteln von Sensordaten eines Fahrzeugs an eine fahrzeugexterne Empfangseinheit sowie ein Anonymisierungssystem und ein Kraftfahrzeug.

Für eine Fahrzeugvernetzung ist es vorteilhaft, wenn Sensordaten, die von einem Fahrzeug ermittelt werden, anderen Fahrzeugen zur Verfügung gestellt werden. Um einen Datenschutz für einen Fahrer zu gewährleisten ist es jedoch notwendig, einen Rückschluss auf das sendende Fahrzeug zu vermeiden. Durch eine Anonymisierung kann ein Personenbezug von Daten vermieden werden.

Aus der DE 10 2015 226 650 A1 ist ein Verfahren zum anonymisierten Übermitteln eines ersten Werts zumindest eines Fahrparameters eines Fahrzeugs an eine externe Datenempfangseinheit bekannt. Bei dem Verfahren wird der erste Wert für den Fahrparameter des Fahrzeugs ermittelt. Es werden weitere Werte für den Fahrparameter, welche von weiteren Fahrzeugen an das Fahrzeug übermittelt werden, von dem Fahrzeug empfangen. Aus dem ersten Wert und den weiteren Werten wird ein zweiter Wert für den Fahrparameter so berechnet, dass der erste Wert von der externen Datenempfangseinheit nicht rekonstruierbar ist. Der zweite Wert wird an die externe Datenempfangseinheit übermittelt.

Aus der DE 10 2010 003 247 A1 ist ein Verfahren zum Anzeigen mindestens eines Effizienzparameters eines Fahrzeugs bekannt, wobei der mindestens eine Effizienzparameter für eine vorbestimmte Fahrstrecke bestimmt wird und der mindestens eine Effizienzparameter in Beziehung zu mindestens einem Referenzwert angezeigt wird, wobei der mindestens eine Referenzwert dieser vorbestimmten Fahrstrecke zugeordnet ist.

Aus der DE 10 2016 211 352 A1 ist ein Verfahren zum Konfigurieren von mobilen Online-Diensten für die Nutzung mit einem Fahrzeug bekannt. Es ist vorgesehen, dass das Verfahren die folgenden Schritte umfasst: Bereitstellen eines Konfigurationssystems, welches Dateninhalte einer Datenfreigabeklasse von mehreren Datenfreigabeklassen zuordnet, Bereitstellen einer Auswahlmöglichkeit für einen Nutzer durch das Konfigurationssystem, durch welche der Nutzer einem oder mehreren mobilen Online-Diensten jeweils die Nutzung der Dateninhalte einer Datenfreigabeklasse erlauben kann, Auswählen jeweils einer Datenfreigabeklasse für den einen oder die mehreren mobilen Online-Dienste, und Freigeben der Dateninhalte der ausgewählten Datenfreigabeklasse zur Nutzung durch den jeweiligen mobilen Online-Dienst durch das Konfigurationssystem.

Aus der US 2018/0122230 A1 sind Systeme und Verfahren zum Sammeln und Analysieren von Daten von Sicherheits- und Betriebssystemen eines Kraftfahrzeugs bekannt. Hierbei werden Identifikationsinformationen aus den Daten entfernt, um eine mögliche Echtzeitverfolgung des Kraftfahrzeugfahrers zu vermeiden.

Aus der US 2017/0358204 A1 ist ein Verfahren, ein Apparat und ein Computerprogrammprodukt zur Verarbeitung von Sensordaten bekannt. Hierbei werden die Sensordaten anonymisiert, indem Daten eliminiert werden, die auf eine eindeutige Identifizierung des Fahrzeugs schließen lassen, von dem die Sensordaten kamen.

Aus der DE 10 2016 225 287 A1 sind ein Verfahren , eine Vorrichtung und ein computerlesbares Speichermedium mit Instruktionen zur Verarbeitung von durch ein Kraftfahrzeug erfassten Daten bekannt. Dabei wird in einem ersten Schritt ein von einem Kraftfahrzeug erfasstes Datum empfangen. Anschließend wird eine örtliche oder zeitliche Verschleierung auf das empfangene Datum von anderen vom Kraftfahrzeug erfassten Daten getrennt. Das verschleierte oder abgetrennte Datum wird schließlich zur Auswertung weitergegeben.

Nachteilig bei derzeitigen Verfahren ist es, dass nicht die Auswirkungen der Anonymisierungsverfahren, sondern die Anonymisierungsmaßnahmen bewertet werden. Da keine Informationen über die Umgebung vorhanden sind, kann die Anonymisierungsmaßnahme nicht dahingehend bewertet werden, mit welcher Wahrscheinlichkeit die Anonymisierung erfolgreich ist.

Der Erfindung liegt die Aufgabe zugrunde, ein Anonymisierungsverfahren für ein Fahrzeug bereitzustellen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Die Erfindung basiert auf der Erkenntnis, dass Sensordaten, die von zwei verschiedenen Sendern kommen können, nicht mehr eindeutig einem Sender zugeordnet werden können.

Durch die Erfindung ist ein Verfahren zum anonymisierten Übermitteln von Sensordaten eines Fahrzeugs an eine fahrzeugexterne Empfangseinheit bereitgestellt, wobei die Sensordaten mit einer Messzeitpunktangabe und/oder mit einer Messortsangabe übermittelt werden. Mit anderen Worten umfassen Sensordaten (zusätzlich zu den eigentlichen Messdaten) die Zeit und/oder den Ort, an der und/oder an dem diese gemessen wurden. Sensordaten können von zumindest einem Sensor aufgenommen werden, der sich in dem Fahrzeug befinden kann. Beispielsweise kann der zumindest eine Sensor zumindest einen elektrischen, optischen und/oder mechanischen Sensor umfassen, insbesondere eine Fahrzeugkamera, ein Fahrzeugradar, Lasersensoren, wie beispielsweise ein Lidar, und/oder druckempfindliche Sensoren in den Stoßdämpfern, die eine Straßenbeschaffenheit detektieren können. Die fahrzeugexterne Empfangseinheit kann ein Server sein, der Streckeninformationen mehrerer Fahrzeuge sammeln kann, um diese auszuwerten und allen Fahrzeugen zur Verfügung zu stellen.

Das erfindungsgemäße Verfahren umfasst ein Ermitteln der Sensordaten an einem Messort des Fahrzeugs zu einem Messzeitpunkt, ein Ermitteln einer Verkehrsdichte in einer Umgebung des Messorts und ein Ermitteln eines anonymisierten Zeitpunkts, der innerhalb eines vorgegebenen Zeitintervalls oder einer vorgegebenen Zeit um den Messzeitpunkt liegt, und/oder Ermitteln eines anonymisierten Aufenthaltsorts, der innerhalb einer vorgegebenen Distanz um den Messort liegt. Mit anderen Worten werden zu einem Messzeitpunkt und einem Messort Sensordaten aufgenommen (wodurch die eigentlichen Messdaten entstehen) und zusätzlich wird die Verkehrsdichte in einer Umgebung des Messorts ermittelt. Die Verkehrsdichte kann hierbei beispielsweise von Verkehrsinformationen eines Navigationssystems stammen, die dem Fahrzeug beziehungsweise dem Navigationsgerät bereitgestellt werden. Die Umgebung kann beispielsweise eine Straße sein auf der sich das Fahrzeug befindet oder ein Ortsteil. Anschließend kann innerhalb der vorgegebenen Zeit um den Messzeitpunkt ein zufälliger anonymisierter Zeitpunkt festgelegt werden, und/oder es kann innerhalb einer vorgegebenen Distanz um den Messort ein zuverlässiger anonymisierter Aufenthaltsort festgelegt werden.

Das Verfahren umfasst ferner ein Berechnen einer Anonymisierungswahrscheinlichkeit des Fahrzeugs auf Basis der Verkehrsdichte und der vorgegebenen Zeit einerseits und/oder auf Basis der Verkehrsdichte und der vorgegebenen Distanz andererseits. Aufgrund der bekannten Verkehrsdichte lässt sich ermitteln, wie wahrscheinlich es ist, dass ein anderes Fahrzeug die Sensordaten zu der anonymisierten Zeit und/oder an den anonymisierten Aufenthaltsort erzeugt haben könnte. Entsprechend erfolgt ein Bestimmen, ob die Anonymisierungswahrscheinlichkeit eine vorgegebene Anonym isierungsbedingung erfüllt, und falls die Anonymisierungsbedingung erfüllt ist, ein Übermitteln der Sensordaten an die externe Empfangseinheit, wobei als die Messzeitpunktangabe, nicht der wahre Messzeitpunkt, sondern der anonymisierte Zeitpunkt angegeben wird und/oder als die Messortsangabe nicht der wahre Messort, sondern der anonymisierte Aufenthaltsort angegeben wird. Mit anderen Worten wird zunächst eine Anonymisierungswahrscheinlichkeit mittels der Verkehrsdichte, das heißt der Fahrzeuge pro Zeit, und der vorgegebenen Zeit um den Messzeitpunkt berechnet. Die vorgegebene Zeit kann beispielsweise ein Zeitintervall sein, das eine Länge von 1 Minute bis 24 Stunden aufweisen kann. Alternativ oder zusätzlich kann auch die Anonymisierungswahrscheinlichkeit auf Basis der Verkehrsdichte und der vorgegebenen Distanz um den Messort berechnet werden. Die Distanz kann ein radialer Raumbereich sein, der einen Radius in einem Bereich von 1 Meter bis 2 Kilometern um den Messort liegen kann, oder es kann eine entsprechende Distanz auf der Straße sein, auf der sich das Fahrzeug befindet. Die Anonymisierungswahrscheinlichkeit kann mittels eines statistischen Verfahrens bestimmt werden und/oder eine prozentuale Wahrscheinlichkeit angeben, von wie vielen andere Fahrzeug jeweils als potentieller Sender der Sensordaten kommen könnten, weil sie sich gemäß der Verkehrsdichte in der Umgebung ebenfalls aufhielten. Anschließend kann der Wert der Anonymisierungswahrscheinlichkeit mit einer vorgegebenen Anonymisierungsbedingung verglichen werden und bestimmt werden, ob die Anonymisierungswahrscheinlichkeit die vorgegebene Anonymisierungsbedingung erfüllt. Die vorgegebene Anonymisierungsbedingung kann beispielsweise ein Wahrscheinlichkeitswert dafür sein, dass mindestens eine vorbestimmte Anzahl an Fahrzeugen als potentielle Sender gegenwärtig waren, und die Bedingung kann erfüllt sein, wenn die Anonymisierungswahrscheinlichkeit über diesem Wahrscheinlichkeitswert liegt. Insbesondere kann die vorgegebene Anonymisierungsbedingung erfüllt sein, wenn die Sensordaten mit mindestens dem besagten Wahrscheinlichkeitswert von größer oder gleich zwei verschiedenen Fahrzeugen kommen können.

Das heißt, es wird auf Basis der Verkehrsdichte und der vorgegebenen Distanz eine Anonymisierungswahrscheinlichkeit berechnet. Hierzu werden statistische Verfahren angewendet, die die Wahrscheinlichkeit angeben, dass die Sensordaten von mindestens zwei Fahrzeugen stammen, die sich innerhalb der vorgegebenen Distanz aufhalten.

Falls diese Anonymisierungsbedingung erfüllt ist, können die Sensordaten an die externe Empfangseinheit übermittelt werden, wobei in den Sensordaten als die Messzeitpunktangabe der anonymisierte Zeitpunkt angegeben wird und/oder als die Messortsangabe der anonymisierte Aufenthaltsort angegeben wird. Falls die Anonymisierungsbedingung nicht erfüllt ist, kann es vorgesehen sein, dass die Sensordaten nicht gesendet werden und z.B. verworfen werden oder es kann vorgesehen sein, dass die Sensordaten zu einem späteren Zeitpunkt mit erneuter Anonymisierung gesendet werden sollen, falls dann die Anonymisierungsbedingung erfüllt ist.

Durch die Erfindung ergibt sich der Vorteil, dass Sensordaten nicht mehr einem bestimmten Fahrzeug zugeordnet werden können, was die Anonymisierung verbessert. Des Weiteren erhält man durch das Verfahren eine Information, mit welcher Wahrscheinlichkeit die Anonymisierung erreicht wurde, und kann so eine Aussage über die Auswirkung des Anonymisierungsverfahrens treffen.

Zu der Erfindung gehören auch Ausführungsformen, durch die sich zusätzliche Vorteile ergeben.

Eine Ausführungsform sieht vor, dass das Ermitteln des anonymisierten Zeitpunkts auf Basis eines Zufallsgenerators durchgeführt wird, wobei der Zufallsgenerator mittels einer Gleichverteilung einen Wert generiert, der innerhalb der vorgegebenen Zeit liegt und/oder wobei das Ermitteln des anonymisierten Aufenthaltsorts auf Basis des Zufallsgenerators durchgeführt wird, wobei der Zufallsgenerator mittels einer Gleichverteilung einen Wert generiert, der innerhalb der vorgegebenen Distanz liegt. Das heißt, dass der anonymisierte Zeitpunkt und/oder der anonymisierte Aufenthaltsort mittels eines Zufallsgenerators zufällig bestimmt wird, wobei der Zufallsgenerator innerhalb der vorgegebenen Zeit um den Messzeitpunkt und/oder innerhalb der vorgegebenen Distanz um den Messort einen gleichverteilten zufälligen Wert generieren kann. Der Zufallsgenerator kann als Programm oder Funktion in einem Fahrzeugrechner vorgesehen sein. Diese Ausführungsform hat den Vorteil, dass hierdurch der anonymisierte Wert mit einer gleichverteilten Wahrscheinlichkeit ermittelt werden kann, wodurch ein Rückschluss auf das sendende Fahrzeug erschwert werden kann und somit die Anonymisierung verbessert werden kann.

Eine weitere Ausführungsform sieht vor, dass die Anonymisierungsbedingung erfüllt wird, wenn die Anonymisierungswahrscheinlichkeit, dass die Sensordaten aufgrund der Verkehrsdichte auch von einem anderen als dem eigenen Fahrzeug stammen, größer als ein Schwellenwert ist. Das heißt, dass Sensordaten, die von zwei oder mehr Fahrzeugen stammen können nicht mehr einem Fahrzeug zuzuordnen sind und die Anonymisierungsbedingung erfüllt wird, wenn die Wahrscheinlichkeit für diesen Fall größer als ein Schwellenwert ist. Beispielsweise kann der Schwellenwert, dass die Sensordaten von mindestens zwei verschiedenen Fahrzeugen stammen, eine Wahrscheinlichkeit von größer gleich 99,9 % betragen. Hierdurch kann sichergestellt werden, dass eine Mindestanzahl an potentiellen Sendern vorhanden ist. Durch diese Ausführungsform ergibt sich der Vorteil, dass eine Anonym isierung verbessert und sichergestellt werden kann.

Eine weitere Ausführungsform sieht vor, dass das Berechnen der Anonym isierungswahrscheinlichkeit mittels einer Poisson-Verteilung durchgeführt wird. Mit anderen Worten wird für die Berechnung der Anonym isierungswahrscheinlichkeit eine Poisson-Verteilung angenommen, mit der die Anzahl von Ereignissen, das heißt von Fahrzeugen, die sich innerhalb der vorgegebenen Zeit und/oder innerhalb der vorgegebenen Distanz befinden oder in diese eintreten können, modelliert werden kann. Beispielsweise kann über die Poisson-Verteilung die Wahrscheinlichkeit bestimmt werden, dass Sensordaten von mindestens zwei Fahrzeugen stammen können, die sich innerhalb der vorgegebenen Distanz und/der der vorgegebenen Zeit aufhalten. Hierdurch ergibt sich der Vorteil, dass eine Wahrscheinlichkeit, insbesondere die Anonymisierungswahrscheinlichkeit, mit der die Sensordaten von mindestens zwei verschiedenen Fahrzeugen kommen können, besser berechnet werden kann und somit die Anonymisierung verbessert werden kann.

Eine weitere Ausführungsform sieht vor, dass die vorgegebene Zeit und/oder die vorgegebene Distanz in Abhängigkeit von den Sensordaten und/oder einem Datentyp der Sensordaten gewählt wird. Mit anderen Worten kann die vorgegebene Zeit und/oder die vorgegebene Distanz, mit der der anonymisierte Zeitpunkt und der anonymisierte Aufenthaltsort des Fahrzeugs ermittelt wird, davon abhängig sein, von welchem Sensor die Sensordaten kommen oder welches Ereignis von dem Sensor aufgenommen wird. Beispielsweise kann eine Fahrzeugkamera ein Ereignis, wie einen Unfall, aufzeichnen, bei dem die Messortsangabe vorzugsweise mit dem Messort übereinstimmen kann. In diesem Beispiel kann die vorgegebene Distanz, mit der die Daten anonymisiert werden sollen, Null sein und die vorgegebene Zeit einen Wert ungleich Null annehmen, wie beispielsweise ein Zeitintervall von 10 Minuten. Hierdurch kann eine Ortsangabe beibehalten werden und zusätzlich eine Anonymisierung gewährleistet werden, indem die Messzeit anonymisiert wird Es kann also nicht mehr rekonstruiert werden wann das Fahrzeug am Messort war. Es kann jedoch auch vorgesehen sein, dass von einem Sensor Sensordaten aufgenommen werden, deren zeitliche Komponente beibehalten werden soll und die unabhängig von dem aktuellen Ort sein kann, wie beispielsweise eine aktuelle Helligkeit zu einer bestimmten Tageszeit. In diesem Fall kann beispielsweise nur die vorgegebene Distanz zur Anonymisierung verwendet werden. Es kann jedoch auch sein, dass die Sensordaten weder zeit- noch ortskritisch sind und somit sowohl die vorgegebene Zeit als auch die vorgegebene Distanz zur Anonymisierung verwendet werden können. Je nach Datentyp kann die vorgegebene Zeit sich beispielsweise im Bereich von Sekunden, Minuten oder Stunden befinden und die vorgegebene Distanz im Bereich von Metern oder Kilometern. Durch diese Ausführungsform ergibt sich der Vorteil, dass wichtige Parameter in den Sensordaten erhalten werden können und dennoch eine Anonymisierung der Sensordaten stattfinden kann. Dadurch kann die Anonymisierung verbessert werden.

Eine Ausführungsform sieht vor, dass das Verfahren ferner ein Empfangen der Sensordaten durch die externe Empfangseinheit und ein Entfernen von Übertragungsinformationen, welche einen Rückschluss auf einen Sender zulassen, aus den Sensordaten umfasst. Mit anderen Worten können die Sensordaten durch die externe Empfangseinheit empfangen werden, und anschließend kann eine Übertragungsinformation, mit der ein Sender identifiziert werden kann, aus den Sensordaten entfernt werden. Die Übertragungsinformationen können beispielsweise eine Fahrzeugidentifikationsnummer, eine IP-Adresse des Fahrzeugs und/oder eine MAC-Adresse sein. Durch diese Ausführungsform ergibt sich der Vorteil, dass auch mittels der Übertragungsinformationen kein Rückschluss mehr auf das sendende Fahrzeug vorgenommen werden kann, was zu einer verbesserten Anonymisierung der Sensordaten führt. Die so anonymisierten Daten können dann beispielsweise einem externen Anbieter für eine Weiterverarbeitung der Sensordaten zur Verfügung gestellt werden, ohne dass dieser Rückschlüsse auf das Fahrzeug erhält von dem die Daten stammen.

Eine weitere Ausführungsform sieht vor, dass das Verfahren ferner folgende Schritte umfasst: ein Bestimmen durch die externe Empfangseinheit, ob mindestens zwei Sätze von Sensordaten für die Umgebung vorhanden sind und falls das Bestimmen bejaht wird, ein Bereitstellen der beiden Sätze von Sensordaten. Mit anderen Worten kann durch die externe Empfangseinheit bestimmt werden, ob für die Umgebung des Messorts, in der auch die Verkehrsdichte ermittelt wird, mindestens zwei Datensätze von Sensordaten bei der externen Sensoreinheit vorhanden sind und, falls dies der Fall ist, eine weitere Bearbeitung der Sätze von Sensordaten zugelassen wird. Das heißt, dass die externe Empfangseinheit eine Art Zwischenspeicher umfassen kann, der die Sensordaten erst freigibt, wenn mindestens zwei Datensätze vorhanden sind. Falls nur ein Satz von Sensordaten vorhanden ist, kann es vorgesehen sein, dass die externe Empfangseinheit einen vorbestimmten Zeitraum auf weitere Datensätze wartet, und wenn in diesem vorbestimmten Zeitraum keine weiteren Datensätze eintreffen, kann die externe Empfangseinheit den einzelnen Satz von Sensordaten verwerfen. Der vorbestimmte Zeitraum kann beispielsweise eine Stunde oder ein Tag sein. Durch diese Ausführungsform ergibt sich der Vorteil, dass eine eindeutige Zuordnung zu einem Sender erschwert werden kann.

Erfindungsgemäß ist auch ein Anonymisierungssystem zum anonymisierten Übermitteln von Sensordaten an eine fahrzeugexterne Empfangseinheit vorgesehen, umfassend die Empfangseinheit und zumindest ein Fahrzeug, wobei das zumindest eine Fahrzeug dazu eingerichtet ist, die Sensordaten mit einer Messzeitpunktangabe und/oder mit einer Messortsangabe zu übermitteln, wobei das Fahrzeug dazu eingerichtet ist, Sensordaten an einem Messort des Fahrzeugs zu einem Zeitpunkt zu ermitteln, eine Verkehrsdichte in einer Umgebung des Messorts zu ermitteln, einen anonymisierten Zeitpunkt, der innerhalb einer vorgegebenen Zeit um den Messzeitpunkt liegt und/oder einen anonymisierten Aufenthaltsort, der innerhalb einer vorgegebenen Distanz um den Messort liegt, zu ermitteln. Das Fahrzeug ist ferner dazu eingerichtet, eine Anonymisierungswahrscheinlichkeit des Fahrzeugs auf Basis der Verkehrsdichte und der vorgegebenen Zeit einerseits und/oder auf Basis der Verkehrsdichte und der vorgegebenen Distanz andererseits zu berechnen und zu bestimmen, ob die Anonymisierungswahrscheinlichkeit eine vorgegebene Anonymisierungsbedingung erfüllt, und, falls diese erfüllt wird, die Sensordaten des Messzeitpunkts an die externe Empfangseinheit zu ermitteln, wobei als die Messzeitpunktangabe der anonymisierte Zeitpunkt angegeben wird und/oder als die Messortsangabe der anonymisierte Aufenthaltsort angegeben wird. Hierbei ergeben sich gleiche Vorteile und Variationsmöglichkeiten wie bei dem Verfahren.

Erfindungsgemäß ist auch ein Kraftfahrzeug mit einer Steuereinrichtung vorgesehen, die dazu ausgelegt ist, das Verfahren durchzuführen. Das Kraftfahrzeug kann hierbei ein Personenkraftwagen, ein Lastkraftwagen, ein Personenbeförderungsbus und ein Motorrad sein.

Zur Veranschaulichung wird auch eine beispielhafte fahrzeugexterne Empfangseinheit beschrieben, die dazu ausgelegt sein kann, Sensordaten zu empfangen, Übertragungsinformationen, welche einen Rückschluss auf einen Sender zulassen, zu entfernen und zu bestimmen, ob mindestens zwei Sätze von Sensordaten für den Messort vorhanden sind, in diesem Fall die beiden Sätze von Sensordaten anzunehmen und zu verarbeiten. Mit anderen Worten können von der externen Empfangseinheit Übertragungsinformationen von den empfangenen Sensordaten entfernt werden und die externe Empfangseinheit kann die Sensordaten erst annehmen und verarbeiten, wenn mindestens zwei Sätze von Sensordaten eingegangen sind, wobei die empfangenen Sensordaten einen Satz von Sensordaten bilden. Hierdurch ergibt sich der Vorteil, dass eine verbesserte Anonymisierung durchgeführt werden kann, indem die Übertragungsinformationen entfernt werden und mindestens zwei Sätze von Sensordaten vorhanden sind. Hierdurch kann eine eindeutige Zuordnung zu einem Sender vermieden werden.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Anonymisierungssystems gemäß einer Ausführungsform;
- Fig. 2a: eine schematische Darstellung einer Bestimmung einer Anonymisierungswahrscheinlichkeit gemäß einer Ausführungsform mit anonymisierten Zeitpunkt;
- Fig. 2b: eine schematische Darstellung einer Bestimmung einer Anonymisierungswahrscheinlichkeit gemäß der Ausführungsform von Fig. 2a mit zusätzlich anonymisierten Aufenthaltsort;
- Fig. 3: ein schematische Verfahrensdiagramm gemäß einer Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

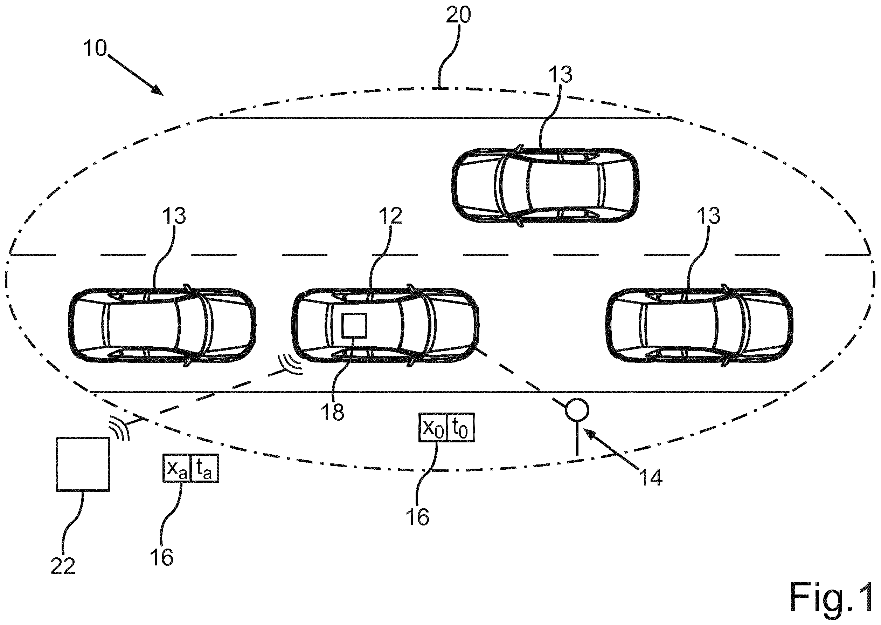

In Fig. 1 ist eine schematische Darstellung eines Anonymisierungssystems 10 gemäß einer bevorzugten Ausführungsform dargestellt. Fig. 1 zeigt ein Fahrzeug 12, das sich auf einer Straße mit einer Mehrzahl anderer Fahrzeugen 13 befinden kann.

Dem in Fig. 1 gezeigten Ausführungsbeispiel kann folgende Situation beispielhaft zugrunde liegen. Das Fahrzeug 12 ist auf der Straße unterwegs, und ein Sensor des Fahrzeugs 12, der beispielsweise eine Kamera eines Fahrerassistenzsystems sein kann, kann ein Ereignis messen, wie in diesem Ausführungsbeispiel ein neues Verkehrsschild 14, das beispielsweise eine neue Geschwindigkeitsbegrenzung anzeigen kann. Die Messung des Verkehrsschilds 14 kann dem Fahrzeug 12 von der Kamera in Form von Sensordaten 16 bereitgestellt werden, wobei die Sensordaten 16 mit einer Messzeitpunktangabe to und einer Messortsangabe x₀ aufgenommen werden können.

Es kann vorgesehen sein, dass die Sensordaten 16 des neuen Verkehrsschilds 14 auch anderen Fahrzeugen 13 bereitgestellt werden sollen. Es soll jedoch nicht bestimmt werden können, von welchem Fahrzeug die Sensordaten 16 stammen. Um die Sensordaten 16 zu anonymisieren, kann in dem Fahrzeug 12 eine Steuereinrichtung 18 vorgesehen sein, die die Sensordaten 16 vor dem Übermitteln anonymisiert.

Die Steuereinrichtung 18 kann dazu eine Verkehrsdichte in einer Umgebung des Messorts x₀ bestimmen, die beispielsweise von einer Verkehrsinformation des Navigationssystems stammen kann, und eine Dichte von Fahrzeugen pro Minute oder pro Stunde angeben kann, die sich auf der gleichen Straße befinden. Zusätzlich kann die Steuereinrichtung 18 einen anonymisierten Aufenthaltsort xₐ ermitteln, der innerhalb einer vorgegebenen Distanz 20 um den Messort xo liegen kann. Es kann jedoch alternativ oder zusätzlich ein anonymisierter Zeitpunkt tₐ ermittelt werden, der innerhalb einer vorgegebenen Zeit (in dieser Figur nicht dargestellt) um den Messzeitpunkt t₀ liegen kann.

Die vorgegebene Distanz 20 und die vorgegebene Zeit können je nach Art der Sensordaten und/oder des Datentyps der Sensordaten durchgeführt werden. Beispielweise kann bei einer aktuellen Temperaturmessung eine größere vorgegebene Distanz 20 und eine längere vorgegebene Zeit verwendet werden, wodurch eine Anonymisierung wahrscheinlicher wird. Es kann auch vorgesehen sein, dass zum Beispiel bei Sensordaten 16, die von einer Kamera stammen, der Messort x₀ wichtiger sein kann als die Messzeit t₀. Dann kann vorgesehen sein, dass die vorgegebene Distanz 20 null Meter beträgt und der anonymisierte Aufenthaltsort xₐ mit dem Messort x₀ zusammenfällt und nur die Zeit anonymisiert wird. In dem in Fig. 1 gezeigten Ausführungsbeispiel ist wegen der besseren Veranschaulichung jedoch nur eine Anonymisierung des Aufenthaltsortes xₐ dargestellt.

Die Ermittlung des anonymisierten Zeitpunkts und des anonymisierten Aufenthaltsorts kann durch einen Zufallsgenerator der Steuereinrichtung 18 durchgeführt werden, wobei der Zufallsgenerator aus einer Gleichverteilung von Ortswerten zufällig einen Wert generieren kann. Hierzu kann beispielsweise die vorgegebene Distanz 20 in Raumbereiche von beispielsweise einer Größe von einem Quadratmeter eingeteilt werden, aus denen mit einer gleichverteilten Wahrscheinlichkeit der anonymisierte Aufenthaltsort xₐ generiert werden kann. Alternativ kann die vorgegebene Zeit in Zeitintervalle aufgeteilt werden, die beispielsweise im Bereich von Sekunden oder Minuten liegen kann, woraus der Zufallsgenerator mit gleicher Wahrscheinlichkeit ein Zeitintervall für den anonymisierten Zeitpunkt tₐ generieren kann.

Anschließend wird auf Basis der Verkehrsdichte und der vorgegebenen Distanz 20 eine Anonymisierungswahrscheinlichkeit berechnet. Hierzu werden statistische Verfahren angewendet, insbesondere die Modellierung einer Poisson-Verteilung, die die Wahrscheinlichkeit angeben kann, dass die Sensordaten 16 von mindestens zwei Fahrzeugen stammen, die sich innerhalb der vorgegebenen Distanz 20 aufhalten. Alternativ oder zusätzlich kann die Anonymisierungswahrscheinlichkeit auch für die Verkehrsdichte und die vorgegebene Zeit bestimmt werden.

Die so erhaltene Anonymisierungswahrscheinlichkeit kann dann von der Steuereinrichtung 18 mit einer vorgegebenen Anonymisierungsbedingung verglichen werden, um zu bestimmen, ob die Anonymisierungsbedingung erfüllt wird. Dabei kann die Anonymisierungsbedingung beispielsweise ein vorgegebener Schwellenwert sein, der bei einem bestimmten Erwartungswert der Poisson-Verteilung eine Wahrscheinlichkeit von beispielsweise über 99,9% angibt, dass mehr als zwei Fahrzeuge die Sensordaten 16 gesendet haben können.

Falls die Anonymisierungsbedingung erfüllt ist, kann das Kraftfahrzeug 12, insbesondere eine Sendeeinheit des Kraftfahrzeugs 12, die beispielsweise Daten über Mobilfunk, W-LAN oder Bluetooth senden kann, die Sensordaten 16 an eine externe Empfangseinheit 22 übermitteln. Die Werte der Messzeitpunktangabe und/oder der Messortsangabe in den Sensordaten 16 werden dabei vor dem Übermitteln durch den anonymisierten Zeitpunkt tₐ und den anonymisierten Aufenthaltsort xₐ ersetzt.

Die externe Empfangseinheit 22 kann die Sensordaten 16 empfangen und die für die Übertragung notwendigen Übertragungsinformationen, wie beispielsweise eine Fahrzeugidentifikationsnummer und/oder eine IP-Adresse aus den Sensordaten 16 entfernen. Zusätzlich kann die externe Empfangseinheit 22 die Sensordaten 16 vor einer Weiterverarbeitung zurückhalten und zunächst bestimmen, ob mindestens zwei Sätze von Sensordaten für die Umgebung des Verkehrsschilds 14 eingetroffen sind. Hierbei können die Sensordaten 16 beispielsweise für einen vorgegebenen Zeitraum zwischengespeichert werden und von der externen Empfangseinheit 22 abgewartet werden, ob innerhalb dieses vorgegebenen Zeitraums weitere Sensordaten eintreffen. Der vorgegebene Zeitraum kann beispielsweise ein Zeitraum im Minuten- oder Stundenbereich sein. Treffen innerhalb dieses Zeitraums keine weiteren Sensordaten ein, kann die externe Empfangseinheit 22 die Sensordaten 16 verwerfen. Falls jedoch weitere Sensordaten empfangen werden, können die mindestens zwei Sätze von Sensordaten zur weiteren Bearbeitung bereitgestellt werden. Eine weitere Bearbeitung der Sensordaten 16 kann beispielsweise von einem externen Dienstleister durchgeführt werden, da dieser, nachdem die Sensordaten 16 durch das gezeigte Verfahren anonymisiert wurden, keinen Rückschluss mehr auf das Fahrzeug 12 ziehen kann.

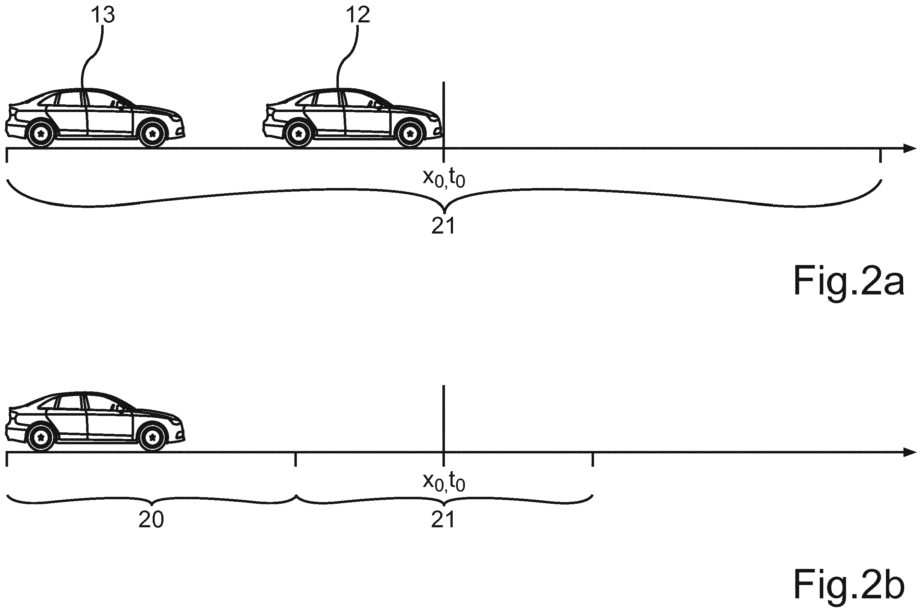

In Fig. 2a ist schematisch veranschaulicht, wie eine Anonymisierungswahrscheinlichkeit mit einem anonymisierten Zeitpunkt tₐ realisiert werden kann. An einem Messort x₀ kann zu einem Messzeitpunkt t₀ ein Fahrzeug 12 Sensordaten 16 aufnehmen. Der Messzeitpunkt kann zufällig durch einen anonymisierten Zeitpunkt tₐ innerhalb der Sensordaten 16 ersetzt werden, wobei der anonymisierte Zeitpunkt tₐ zufällig innerhalb einer vorgegebenen Zeit 21 generiert werden kann. Innerhalb dieser vorgegebenen Zeit 21 kann mit Hilfe der Verkehrsdichte eine Anzahl von Fahrzeugen beim Messort xo modelliert werden, die innerhalb der vorgegebenen Zeit 21 erwartet werden. Eine Modellierung über einen Poisson-Prozess kann dann ergeben, dass bei einem Erwartungswert von größer gleich zehn Fahrzeugen zu über 99,9% mehr als zwei Fahrzeuge vorhanden innerhalb des Zeitintervalls vorhanden waren, und die Sensordaten 16 somit auch von einem anderen Fahrzeug 13 stammen könnten.

In Fig. 2b ist die gleiche Situation wie in Fig. 2a dargestellt, jedoch ist hier das Intervall der vorgegebenen Zeit 21 zusätzlich durch ein Intervall der vorgegebenen Distanz 20 erweitert. Diese zufällige Ortsungenauigkeit kann das zeitliche Intervall der vorgegebenen Zeit 21 erweitern. Beispielsweise kann somit die durchschnittliche Aufenthaltsdauer in der Umgebung des Messorts xo von bereits vor Beginn der vorgegebenen Zeit 21 in die Umgebung des Messorts einfahrender Fahrzeuge mitberücksichtigt werden. Das heißt, dass bei einer bekannten Geschwindigkeit der Fahrzeuge, die sich innerhalb der vorgegebenen Distanz 20 befinden, bestimmt werden kann, wie viele Fahrzeuge noch in das Intervall der vorgegebenen Zeit 21 fahren werden. Somit kann bei der Modellierung der Anonymisierungswahrscheinlichkeit eine höhere Genauigkeit erzielt werden.

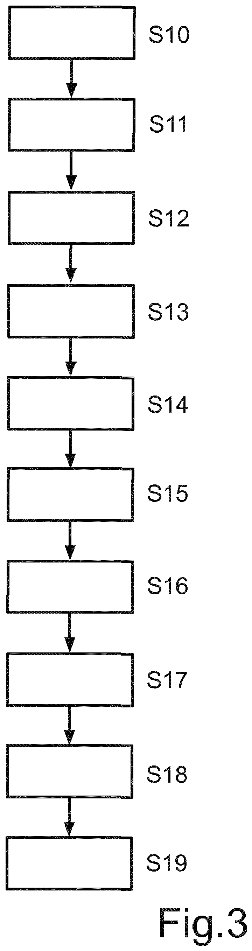

In Fig. 3 ist ein schematisches Verfahrensdiagramm einer Ausführungsform dargestellt. In einem Schritt S10 werden Sensordaten 16 an einem Messort xo des Fahrzeugs 12 zu einem Messzeitpunkt t₀ ermittelt.

In einem Schritt S11 wird in einer Umgebung des Messorts xo eine Verkehrsdichte ermittelt.

In einem Schritt S12 wird ein anonymisierter Zeitpunkt tₐ ermittelt, der innerhalb einer vorgegebenen Zeit 21 um den Messzeitpunkt to liegt, und/oder es wird ein anonymisierter Aufenthaltsort xₐ ermittelt, der innerhalb einer vorgegebenen Distanz 20 um den Messort x₀ liegt.

In einem Schritt S13 wird eine Anonymisierungswahrscheinlichkeit des Fahrzeugs 12 auf Basis der Verkehrsdichte und der vorgegebenen Zeit 21 berechnet und/oder die Anonymisierungswahrscheinlichkeit wird auf Basis der Verkehrsdichte und der vorgegebenen Distanz 20 berechnet.

In einem Schritt S14 wird bestimmt, ob die Anonymisierungswahrscheinlichkeit eine vorgegebene Anonymisierungsbedingung erfüllt, und falls diese Anonymisierungsbedingung erfüllt ist, werden in einem Schritt S15 die Sensordaten 16 an eine externe Empfangseinheit 22 übermittelt, wobei der anonymisierte Zeitpunkt ta und/oder der anonym isierte Aufenthaltsort xa als eine Messzeitpunktangabe und/oder eine Messortsangabe der Sensordaten 16 mit übermittelt werden.

In einem Schritt S16 können die Sensordaten 16 durch die externe Empfangseinheit 22 empfangen werden, die in einem Schritt S17 Übertragungsinformationen, welche einen Rückschluss auf einen Sender zulassen, aus den Sensordaten 16 entfernen kann.

Die externe Empfangseinheit 22 kann in einem Schritt S18 ferner bestimmen, ob mindestens zwei Sätze von Sensordaten für die Umgebung vorhanden sind und, falls das zutrifft, in einem Schritt S19 die beiden Sätze von Sensordaten zur weiteren Verwendung bereitstellen.

In einer anderen beispielhaften Ausführungsform besteht ein Aspekt darin, dass in einem Fahrzeug 12 ein Positionsverfremder zur Ermittlung eines anonymisierten Aufenthaltsorts xₐ sowie ein Verfälscher für Zeitstempel zur Ermittlung eines anonymisierten Zeitpunkts tₐ vorgehalten und umgesetzt werden, um diese Funktionen absichern zu können. Die externe Empfangseinheit 22 außerhalb des Fahrzeugs 12 nimmt die gesendeten Sensordaten 16 zu einer Messung erst an, wenn eine zweite Messung hierfür vorliegt, um eine eindeutige Zuordnung zu einem Sender zu vermeiden. Zusätzliche Maßnahmen der externen Empfangseinheit 22 können eine Identifikation des Fahrzeugs beim Übermitteln der Sensordaten 16 sowie ein ungewolltes Verknüpfen von Messorten zu einem durchgehenden Profil durch Entfernen von Übertragungsinformationen, welche einen Rückschluss auf den Sender zulassen, verhindern.

Insgesamt zeigt das Beispiel, wie durch die Erfindung ein Verfahren zur Sicherstellung von Anonymität in Ort und Zeit bereits im Fahrzeug bereitgestellt werden kann.

## Patentansprüche

1. Verfahren zum anonymisierten Übermitteln von Sensordaten (16) eines Fahrzeugs (12) an eine fahrzeugexterne Empfangseinheit (22), wobei die Sensordaten (16) mit einer Messzeitpunktangabe und/oder mit einer Messortssangabe übermittelt werden,
mit den Schritten:
- Ermitteln (S10) der Sensordaten (16) an einem Messort (x₀) des Fahrzeugs zu einem Messzeitpunkt (t₀);
- Ermitteln (S11) einer Verkehrsdichte in einer Umgebung des Messorts (x₀);
- Ermitteln (S12) eines anonymisierten Zeitpunkts (tₐ), der innerhalb einer vorgegebenen Zeit (21) um den Messzeitpunkt (t₀) liegt, und/oder Ermitteln (S12) eines anonymisierten Aufenthaltsorts (xₐ), der innerhalb einer vorgegebenen Distanz (20) um den Messort (x₀) liegt;
- Berechnen (S13) einer Anonymisierungswahrscheinlichkeit des Fahrzeugs auf Basis der Verkehrsdichte und der vorgegebenen Zeit (21) einerseits und/oder auf Basis der Verkehrsdichte und der vorgegebenen Distanz (20) andererseits;
- Bestimmen (S14), ob die Anonymisierungswahrscheinlichkeit eine vorgegebene Anonymisierungsbedingung erfüllt; und
- falls die Anonymisierungsbedingung erfüllt ist, Übermitteln (S15) der Sensordaten (16) an die externe Empfangseinheit (22), wobei als die Messzeitpunktangabe der anonymisierte Zeitpunkt (tₐ) angegeben wird und/oder als die Messortsangabe der anonymisierte Aufenthaltsort (xₐ) angegeben wird;
- wobei für die Berechnung der Anonymisierungswahrscheinlichkeit statistische Verfahren angewendet werden, die die Wahrscheinlichkeit angeben, dass die Sensordaten (16) von mindestens zwei Fahrzeugen stammen können, die sich innerhalb der vorgegebenen Distanz (20) und/oder der vorgegebenen Zeit (21) aufhalten.

2. Verfahren nach Anspruch 1, wobei das Ermitteln des anonymisierten Zeitpunkts (tₐ) auf Basis eines Zufallsgenerators durchgeführt wird, wobei der Zufallsgenerator mittels einer Gleichverteilung einen Wert generiert, der innerhalb der vorgegebenen Zeit (21) liegt, und/oder wobei das Ermitteln des anonymisierten Aufenthaltsorts (xₐ) auf Basis des Zufallsgenerators durchgeführt wird, wobei der Zufallsgenerator mittels einer Gleichverteilung einen Wert generiert, der innerhalb der vorgegebenen Distanz (20) liegt.

3. Verfahren nach einem der vorhergehenden Ansprüche, wobei die Anonymisierungsbedingung erfüllt wird, wenn die Anonymisierungswahrscheinlichkeit, dass die Sensordaten (16) aufgrund der Verkehrsdichte auch von einem anderen als dem eigenen Fahrzeug (12) stammen, größer als ein Schwellenwert ist.

4. Verfahren nach einem der vorhergehenden Ansprüche, wobei das Berechnen der Anonymisierungswahrscheinlichkeit mittels einer Poisson-Verteilung durchgeführt wird.

5. Verfahren nach einem der vorhergehenden Ansprüche, wobei die vorgegebene Zeit (21) und/oder die vorgegebene Distanz (21) in Abhängigkeit von den Sensordaten (16) und/oder einem Datentyp der Sensordaten (16) gewählt wird.

6. Verfahren nach einem der vorhergehenden Ansprüche, ferner umfassend folgende Schritte:
- Empfangen (S16) der Sensordaten (16) durch die externe Empfangseinheit (22);
- Entfernen (S17) von Übertragungsinformationen, welche einen Rückschluss auf einen Sender zulassen, aus den Sensordaten (16).

7. Verfahren nach Anspruch 6, ferner umfassend folgende Schritte:
- Bestimmen (S18) durch die externe Empfangseinheit (22), ob mindestens zwei Sätze von Sensordaten für die Umgebung vorhanden sind;
- falls das Bestimmen bejaht wird, Bereitstellen (S19) der beiden Sätze von Sensordaten.

8. Anonymisierungssystem (10) zum anonymisierten Übermitteln von Sensordaten (16) an eine fahrzeugexterne Empfangseinheit (22), umfassend die Empfangseinheit (22) und zumindest ein Fahrzeug (12), wobei das zumindest eine Fahrzeug (12) dazu eingerichtet ist, die Sensordaten (16) mit einer Messzeitpunktangabe und/oder mit einer Messortsangabe zu übermitteln, wobei das Fahrzeug (12) dazu eingerichtet ist, Sensordaten (16) an einem Messort (x₀) des Fahrzeugs zu einem Messzeitpunkt (t₀) zu ermitteln, eine Verkehrsdichte in einer Umgebung des Messorts (x₀) zu ermitteln, einen anonymisierten Zeitpunkt (tₐ), der innerhalb einer vorgegebenen Zeit (21) um den Messzeitpunkt (t₀) liegt, und/oder einen anonymisierten Aufenthaltsort (xₐ), der innerhalb einer vorgegebenen Distanz (20) um den Messort (x₀) liegt, zu ermitteln, eine Anonymisierungswahrscheinlichkeit des Fahrzeugs auf Basis der Verkehrsdichte und der vorgegebenen Zeit (21) einerseits und/oder auf Basis der Verkehrsdichte und der vorgegebenen Distanz (20) andererseits zu berechnen, und zu bestimmen, ob die Anonymisierungswahrscheinlichkeit eine vorgegebene Anonymisierungsbedingung erfüllt, und falls diese erfüllt wird die Sensordaten (16) des Messzeitpunkts an die externe Empfangseinheit (22) zu übermitteln, wobei als die Messzeitpunktangabe der anonymisierte Zeitpunkt (tₐ) angegeben wird und/oder als die Messortsangabe der anonymisierte Aufenthaltsort (tₐ) angegeben wird und wobei das Fahrzeug (12) ferner dazu eingerichtet ist, für die Berechnung der Anonymisierungswahrscheinlichkeit statistische Verfahren anzuwenden, die die Wahrscheinlichkeit angeben, dass die Sensordaten (16) von mindestens zwei Fahrzeugen stammen können, die sich innerhalb der vorgegebenen Distanz (20) und/oder der vorgegebenen Zeit (21) aufhalten.

9. Kraftfahrzeug (12) mit einer Steuereinrichtung (18) und einem Sensor, wobei der Sensor dazu ausgebildet ist, Sensordaten (16) an einem Messort (x₀) zu einem Messzeitpunkt (t₀) zu ermitteln; wobei die Steuereinrichtung (18) dazu ausgebildet ist, eine Verkehrsdichte in einer Umgebung des Messorts (x₀) zu ermitteln und einen anonymisierten Zeitpunkt (tₐ), der innerhalb einer vorgegebenen Zeit (21) um den Messzeitpunkt (t₀) liegt und/oder einen anonymisierten Aufenthaltsort (xₐ), der innerhalb einer vorgegebenen Distanz (20) um den Messort (x₀) liegt zu ermitteln, wobei die Steuereinrichtung (18) ferner dazu ausgebildet ist, eine Anonymisierungswahrscheinlichkeit des Kraftfahrzeugs (12) auf Basis der Verkehrsdichte und der vorgegebenen Zeit (21) einerseits und/oder auf Basis der Verkehrsdichte und der vorgegebenen Distanz (20) andererseits zu berechnen und zu bestimmen, ob die Anonymisierungswahrscheinlichkeit eine vorgegebene Anonymisierungsbedingung erfüllt, und wobei eine Sendeeinheit des Kraftfahrzeugs dazu ausgebildet ist, die Sensordaten (16) an eine externe Empfangseinheit (22) zu übermitteln, falls die Anonymisierungsbedingung erfüllt ist, wobei als die Messzeitpunktangabe der anonymisierte Zeitpunkt (tₐ) und/oder als die Messortsangabe der anonymisierte Aufenthaltsort (xₐ) angegeben ist, und wobei die Steuereinrichtung (18) dazu ausgebildet ist, für die Berechnung der Anonymisierungswahrscheinlichkeit statistische Verfahren anzuwenden, die die Wahrscheinlichkeit angeben, dass die Sensordaten (16) von mindestens zwei Fahrzeugen stammen können, die sich innerhalb der vorgegebenen Distanz (20) und/oder der vorgegebenen Zeit (21) aufhalten.

## Claims

1. Method for the anonymised transmission of sensor data (16) of a vehicle (12) to a vehicle-external receiving unit (22), wherein the sensor data (16) are transmitted with a measurement time point specification and/or a measurement location specification, comprising the steps of:
- determining (S10) the sensor data (16) at a measurement location (x₀) of the vehicle at a measurement time point (t₀);
- determining (S11) a traffic density in a vicinity of the measurement location (x₀);
- determining (S12) an anonymised time point (tₐ) that is within a specified time (21) of the measurement time point (t₀), and/or determining (S12) an anonymised residence location (xₐ) that is within a specified distance (20) of the measurement location (x₀);
- calculating (S13) an anonymisation probability of the vehicle on the basis of the traffic density and the specified time (21) on the one hand and/or on the basis of the traffic density and the specified distance (20) on the other hand;
- deciding (S14) whether the anonymisation probability satisfies meets a specified anonymisation condition; and
- if the anonymisation condition is satisfied, transmission (S15) of the sensor data (16) to the external receiving unit (22), wherein the anonymised time point (tₐ) is given as the measurement time point specification and/or the anonymised residence location (xₐ) is given as the measurement location specification;
wherein for the calculating of the anonymisation probability statistical methods are applied, which give the probability that the sensor data (16) could originate from at least two vehicles that reside within the specified distance (20) and/or the specified time (21).

2. Method according to claim 1, wherein the determining of the anonymised time point (tₐ) is carried out on the basis of a random number generator, wherein the random number generator generates a value by means of a uniform distribution, which value is within the specified time (21), and/or wherein the determining of the anonymised residence location (xₐ) is carried out on the basis of the random number generator, wherein the random number generator generates a value by means of a uniform distribution, which value is within the specified distance (20).

3. Method according to any one of the preceding claims, wherein the anonymisation condition is satisfied if the anonymisation probability that the sensor data (16) also originate from another vehicle than one's own vehicle (12) is greater than a threshold value.

4. Method according to any one of the preceding claims, wherein the calculating of the anonymisation probability is carried out by means of a Poisson distribution.

5. Method according to any one of the preceding claims, wherein the specified time (21) and/or the specified distance (21) is selected as a function of the sensor data (16) and/or a data type of the sensor data (16).

6. Method according to any one of the preceding claims, further comprising the following steps:
- receiving (S16) the sensor data (16) by the external receiving unit (22);
- removing (S17) from the sensor data (16) transmission information that could allow an inference regarding a sender to be made.

7. Method according to claim 6, further comprising the following steps:
- determining (S18) by the external receiving unit (22) whether at least two sets of sensor data are available;
- if the result of the determining is positive, providing (S19) both sets of sensor data.

8. Anonymisation system (10) for the anonymised transmission of sensor data (16) to a vehicle-external receiving unit (22), comprising the receiving unit (22) and at least one vehicle (12), wherein the at least one vehicle (12) is adapted to transmit the sensor data (16) with a measurement time point specification and/or with a measurement location specification, wherein the vehicle (12) is adapted to determine sensor data (16) at a measurement location (x₀) of the vehicle at a measurement time point (t₀), to determine a traffic density in a vicinity of the measurement location (x₀), to determine an anonymised time point (tₐ) that lies within a specified time (21) of the measurement time point (t₀), and/or an anonymised residence location (xₐ) that lies within a specified distance (20) of the measurement location (x₀), to calculate an anonymisation probability of the vehicle on the basis of the traffic density and the specified time (21) on the one hand and/or on the basis of the traffic density and the specified distance (20) on the other hand, and to determine whether the anonymisation probability satisfies a specified anonymisation condition, and if the latter is satisfied to transmit the sensor data (16) of the measurement time point to the external receiving unit (22), wherein the anonymised time point (tₐ) is given as the measurement time point specification and/or the anonymised residence location (xₐ) is given as the measurement location specification and wherein the vehicle (12) is further adapted, for the calculating of the anonymisation probability, to apply statistical methods that give the probability that the sensor data (16) could originate from at least two vehicles that reside within the specified distance (20) and/or the specified time (21).

9. Motor vehicle (12) with a control device (18) and a sensor, wherein the sensor is configured to transmit sensor data (16) at a measurement location (x₀) at a measurement time point (t₀); wherein the control device (18) is configured to determine a traffic density in a vicinity of the measurement location (x₀) and to determine an anonymised time point (tₐ) that lies within a specified time (21) of the measurement time point (t₀) and/or an anonymised residence location (xₐ) that lies within a specified distance (20) of the measurement location (x₀), wherein the control device (18) is further configured to calculate an anonymisation probability of the vehicle (12) on the basis of the traffic density and the specified time (21) on the one hand and/or on the basis of the traffic density and the specified distance (20) on the other hand and to decide whether the anonymisation probability satisfies a specified anonymisation condition, and wherein a transmitter unit of the motor vehicle is configured to transmit the sensor data (16) to an external receiving unit (22), if the anonymisation condition is satisfied, wherein the anonymised time point (tₐ) is given as the measurement time point specification and/or the anonymised residence location (xₐ) is given as the measurement location specification, and wherein the control device (18) is configured, for the calculating of the anonymisation probability, to apply statistical methods that give the probability that the sensor data (16) could originate from at least two vehicles that reside within the specified distance (20) and/or the specified time (21).

## Revendications

1. Procédé de transmission anonymisée de données de capteur (16) d'un véhicule automobile (12) à une unité de réception extérieure au véhicule (22), dans lequel les données de capteur (16) sont transmises avec une indication de temps de mesure et/ou avec une indication de site de mesure, avec les étapes consistant à :
- déterminer (S10) les données de capteur (16) à un site de mesure (x₀) du véhicule automobile à un moment de mesure (t₀);
- déterminer (S11) une densité de circulation dans un environnement du site de mesure (x₀) ;
- déterminer (S12) un moment anonymisé (tₐ) qui se situe au sein d'un temps prédéterminé (21) autour du moment de mesure (t₀) et/ou déterminer (S12) un site d'arrêt anonymisé (xₐ) qui se situe au sein d'une distance prédéterminée (20) autour du site de mesure (x₀) ;
- calculer (S13) une probabilité d'anonymisation du véhicule automobile sur la base de la densité de circulation et du temps prédéterminé (21) d'une part et/ou sur la base de la densité de circulation et de la distance prédéterminée (20) d'autre part ;
- déterminer (S14) si la probabilité d'anonymisation remplit une condition d'anonymisation prédéterminée ; et
- si la condition d'anonymisation est remplie, transmettre (S15) des données de capteur (16) à l'unité de réception externe (22), dans lequel le moment anonymisé (tₐ) est spécifié en tant qu'indication de moment de mesure et/ou le site d'arrêt anonymisé (xₐ) est spécifié en tant que'indication de site de mesure ;
- dans lequel, pour le calcul de la probabilité d'anonymisation, des méthodes statistiques sont utilisées, qui indiquent la probabilité que les données de capteur (16) puissent provenir d'au moins deux véhicules automobiles qui se situent au sein de la distance prédéterminée (20) et/ou du temps prédéterminé (21).

2. Procédé selon la revendication 1, dans lequel la détermination du moment anonymisé (tₐ) est effectuée sur la base d'un générateur aléatoire, dans lequel le générateur aléatoire génère une valeur au moyen d'une distribution uniforme qui se situe au sein du temps prédéterminé (21), et/ou dans lequel la détermination du site d'arrêt anonymisé (xₐ) est effectuée sur la base du générateur aléatoire, dans lequel le générateur aléatoire génère une valeur au moyen d'une distribution uniforme qui se situe au sein de la distance prédéterminée (20).

3. Procédé selon l'une quelconque des revendications précédentes, dans lequel la condition d'anonymisation est remplie si la probabilité d'anonymisation que les données de capteur (16) proviennent également d'un véhicule automobile autre que son propre véhicule (12) en raison de la densité de circulation est supérieure à une valeur seuil.

4. Procédé selon l'une quelconque des revendications précédentes, dans lequel le calcul de la probabilité d'anonymisation est effectué au moyen d'une distribution de Poisson.

5. Procédé selon l'une quelconque des revendications précédentes, dans lequel le temps prédéterminé (21) et/ou la distance prédéterminée (21) sont sélectionnés en fonction des données de capteur (16) et/ou d'un type de données des données de capteur (16).

6. Procédé selon l'une quelconque des revendications précédentes, comprenant en outre les étapes suivantes consistant à :
- recevoir (S16) les données de capteur (16) par l'unité de réception externe (22) ;
- retirer (S17) à partir des données de capteur (16) des informations de transmission qui permettent de tirer une conclusion d'un émetteur.

7. Procédé selon la revendication 6, comprenant en outre les étapes suivantes consistant à :
- déterminer (S18) par l'unité de réception externe (22) si au moins deux ensembles de données de capteur pour l'environnement sont présents ;
- si la détermination est affirmée, fournir (S19) les deux ensembles de données de capteur.

8. Système d'anonymisation (10) pour la transmission anonymisée de données de capteur (16) à une unité de réception externe au véhicule (22), comprenant l'unité de réception (22) et au moins un véhicule automobile (12), dans lequel l'au moins un véhicule automobile (12) est configuré pour transmettre les données de capteur (16) avec une indication de moment de mesure et/ou avec une indication de site de mesure, dans lequel le véhicule automobile (12) est configuré pour déterminer des données de capteur (16) à un site de mesure (x₀) du véhicule automobile à un moment de mesure (t₀), déterminer une densité de circulation dans un environnement du site de mesure (x₀), déterminer un moment anonymisé (tₐ) qui se situe au sein d'un temps prédéterminé (21) autour du moment de mesure (t₀) et/ou déterminer un site d'arrêt anonymisé (xₐ) qui se situe au sein d'une distance prédéterminée (20) autour du site de mesure (x₀), calculer une probabilité d'anonymisation du véhicule automobile sur la base de la densité de circulation et du temps prédéterminé (21) d'une part et/ou sur la base de la densité de circulation et de la distance prédéterminée (20) d'autre part, et déterminer si la probabilité d'anonymisation remplit une condition d'anonymisation prédéterminée, et si celle-ci est remplie, transmettre les données de capteur (16) du moment de mesure à l'unité de réception externe (22), dans lequel le moment anonymisé (tₐ) est indiqué en tant qu'indication de moment de mesure et/ou le site d'arrêt anonymisé (tₐ) est indiqué en tant qu'indication de site de mesure, et dans lequel le véhicule automobile (12) est en outre configuré pour utiliser des méthodes statistiques pour le calcul de la probabilité d'anonymisation qui indiquent la probabilité que les données de capteur (16) puissent provenir d'au moins deux véhicules automobiles qui se situent au sein de la distance prédéterminée (20) et/ou du temps prédéterminé (21).

9. Véhicule automobile (12) avec un dispositif de commande (18) et un capteur, dans lequel le capteur est conçu pour déterminer des données de capteur (16) à un site de mesure (x₀) à un moment de mesure (t₀) ; dans lequel le dispositif de commande (18) est conçu pour déterminer une densité de circulation dans un environnement du site de mesure (x₀) et un moment anonymisé (tₐ) qui se situe au sein d'un temps prédéterminé (21) autour du moment de mesure (t₀) et/ou un site d'arrêt anonymisé (xₐ) qui se situe au sein d'une distance prédéterminée (20) autour du site de mesure (x₀), dans lequel le dispositif de commande (18) est également conçu pour déterminer une probabilité d'anonymisation du véhicule automobile (12) sur la base de la densité de circulation et du temps prédéterminé (21) d'une part et/ou sur la base de la densité de circulation et de la distance prédéterminée (20) d'autre part et pour déterminer si la probabilité d'anonymisation remplit une condition d'anonymisation prédéterminée, et dans lequel une unité d'émission du véhicule automobile est conçue pour transmettre les données de capteur (16) à une unité de réception externe (22), si la condition d'anonymisation est remplie, dans lequel le moment anonymisé (tₐ) est spécifié en tant qu'indication de moment de mesure et/ou le site d'arrêt anonymisé (xₐ) est spécifié en tant qu'indication de site de mesure, et dans lequel le dispositif de commande (18) est conçu pour utiliser des méthodes statistiques pour le calcul de la probabilité d'anonymisation, qui indiquent la probabilité que les données de capteur (16) puissent provenir d'au moins deux véhicules automobiles qui se situent au sein de distance prédéterminée (20) et/ou du temps prédéterminé (21).
